# EUROPEAN PATENT APPLICATION

(11) **EP 4 149 085 A1**
(43) Date of publication of application: **15.03.2023**
(21) Application number: 22178198.2
(22) Date of filing: 09.06.2022
(51) Int. Cl.: H04L 65/1069, H04L 65/1096, H04L 65/403, H04L 67/75, H04L 51/04, H04L 65/401

(54) **METHOD AND APPARATUS FOR INFORMATION PROMPT**

(30) Priority: 14.09.2021 CN 202111072199
(71) Applicant: Beijing Dajia Internet Information Technology Co., Ltd., Beijing 100085 (CN)
(72) Inventor: SONG, Chuqiao, Beijing, 100085 (CN); SUN, Yaqi, Beijing, 100085 (CN); JIAO, Chunyu, Beijing, 100085 (CN); XU, Jie, Beijing, 100085 (CN); ZHANG, Renjie, Beijing, 100085 (CN)
(74) Representative: Yang, Shu

(57) **Abstract**

Provided is a method and an apparatus for information prompt, including: receiving (201; 301) an audio/video call invitation, and displaying (202; 302), in the case that the account does not accept the audio/video call invitation, a first state prompt at the position of a session to which a target audio/video call belongs on a session list page of an account logged on a terminal. The first state prompt indicates that there is an unjoined audio/video call which is in progress.

## Description

### TECHNICAL FIELD

The present disclosure relates to the field of computer technologies, and in particular, relates to a method and an apparatus for information prompt.

### BACKGROUND

With the rapid development of computer technologies and the wide application of instant messaging functions, the interaction demand of users gradually increases, and instant messaging has become a common way for users to communicate with others. For example, the users can make audio/video calls, such as voice calls and video calls, through instant messaging applications. In related art, when a terminal receives an audio/video call invitation for a group chat, the terminal displays a message notifying the invitation of the audio/video call before or after a certain period from the starting time of the audio/video call. Despite such notification, a user may still miss the audio/video call if the user had been busy during the display period or has not pay attention to the notification message.

### SUMMARY

Embodiments of the present disclosure provide a method and an apparatus for information prompt. The technical solutions of the present disclosure are as follows.

According to one aspect of the embodiments of the present disclosure, a method for information prompt is provided. The method includes: receiving an audio/video call invitation, wherein the audio/video call invitation is configured to invite an account logged on a terminal to join a target audio/video call; and displaying, in the case that the account does not accept the audio/video call invitation, a first state prompt at the position of a session to which the target audio/video call belongs on a session list page of the account, wherein the first state prompt indicates that there is an unjoined audio/video call which is in progress.

In some embodiments, the case that the account does not accept the audio/video call invitation comprises any one of cases that: the account does not accept the audio/video call within a target time period, a reject operation of the account on the audio/video call invitation is received, a close operation of the account on the audio/video call invitation is received, and the account is in a busy state.

In some embodiments, upon displaying, in the case that the account does not accept the audio/video call invitation, the first state prompt at the position of the session to which the target audio/video call belongs on the session list page of the account, the method further includes: displaying, in response to a trigger operation on the session to which the target audio/video call belongs, a session interface of the session to which the target audio/video call belongs; or in response to a trigger operation on the first state prompt, joining the target audio/video call, or displaying the session interface of the session to which the target audio/video call belongs, or displaying the session interface of the session to which the target audio/video call belongs and positioning the session interface at an initiating position of the target audio/video call, or displaying the session interface of the session to which the target audio/video call belongs and displaying a positioning prompt, wherein the positioning prompt is configured to position the initiating position of the target audio/video call.

In some embodiments, upon displaying, in the case that the account does not accept the audio/video call invitation, the first state prompt at the position of the session to which the target audio/video call belongs on the session list page of the account, the method further includes: switching, in response to the account joining the target audio/video call, the first state prompt to a second state prompt at the position of the session to which the target audio/video call belongs on the session list page of the account, wherein the second state prompt is configured to indicate that the account has joined the target audio/video call.

In some embodiments, upon switching, in response to the account joining the target audio/video call, the first state prompt to the second state prompt at the position of the session to which the target audio/video call belongs on the session list page of the account, the method further includes: stopping displaying the second state prompt in response to the account exiting the target audio/video call.

In some embodiments, the method further includes: stopping displaying the first state prompt in response to ending of the target audio/video call.

In some embodiments, the session list page includes a session list region and a session top-sticky region, wherein the session list region is configured to display a list of sessions corresponding to the account, and the session top-sticky region is configured to stick the sessions corresponding to the account to the top for display; displaying the first state prompt at the position of the session to which the target audio/video call belongs on the session list page of the account includes at least one of: displaying the first state prompt on a session prompt item of the target audio/video call in the session list region; displaying the first state prompt on a session aggregation item in the session list region; and displaying the first state prompt on a session prompt item of the target audio/video call in the session top-sticky region.

In some embodiments, the method further includes at least one of: displaying an interaction notification prompt and an unread message prompt of the session to which the target audio/video call belongs on the session prompt item of the target audio/video call in the session list region, wherein the interaction notification prompt indicates that the session to which the target audio/video call belongs mentions the account, and the unread message prompt indicates the number of unread messages in session to which the target audio/video call belongs; displaying the interaction notification prompt and the unread message prompt of the session to which the target audio/video call belongs on the session aggregation item in the session list region; and displaying any one of a state prompt, the interaction notification prompt, and the unread message prompt of the session to which the target audio/video call belongs on the session prompt item of the target audio/video call in the session top-sticky region.

In some embodiments, a display priority of the state prompt is greater than a display priority of the interaction notification prompt, and the display priority of the interaction notification prompt is greater than a display priority of the unread message prompt; and the method further includes at least one of: sequentially displaying the state prompt, the interaction notification prompt, and the unread message prompt of the session to which the target audio/video call belongs, based on an arrangement order corresponding to the display priority, on the session prompt item of the target audio/video call in the session list region; sequentially displaying the state prompt, the interaction notification prompt, and the unread message prompt of the session to which the target audio/video call belongs, based on the arrangement order corresponding to the display priority, on the session aggregation item in the session list region; and displaying the prompt with the highest display priority on the session prompt item of the target audio/video call in the session top-sticky region.

In some embodiments, the method further includes: displaying any one of a group profile photo of the session to which the target audio/video call belongs, a profile photo of an account initiating the target audio/video call in the session to which the target audio/video call belongs, and a profile photo of any at least one account in the session to which the target audio/video call belongs at the position of the session to which the target audio/video call belongs on the session list page.

According to another aspect of the embodiments of the present disclosure, an apparatus for information prompt is provided. The apparatus includes a receiving unit, configured to receive an audio/video call invitation, wherein the audio/video call invitation is configured to invite an account logged on a terminal to join a target audio/video call; and a displaying unit, configured to display, in the case that the account does not accept the audio/video call invitation, a first state prompt at the position of a session to which the target audio/video call belongs on a session list page of the account, wherein the first state prompt indicates that there is an unjoined audio/video call which is in progress.

According to still another aspect of the embodiments of the present disclosure, a non-volatile computer-readable storage medium storing a program code therein is provided, wherein the program code, when loaded and executed by a processor of a computer device, causes the computer device to perform: receiving an audio/video call invitation, wherein the audio/video call invitation is configured to invite an account logged on a terminal to join a target audio/video call; and displaying, in the case that the account does not accept the audio/video call invitation, a first state prompt at the position of a session to which the target audio/video call belongs on a session list page of the account, wherein the first state prompt indicates that there is an unjoined audio/video call which is in progress.

### BRIEF DESCRIPTION OF THE DRAWINGS

FIG. 1 is a schematic diagram of an implementation environment of a method for information prompt according to an exemplary embodiment;
FIG. 2 is a flow chart of a method for information prompt according to an exemplary embodiment;
FIG. 3 is a flow chart of a method for information prompt according to an exemplary embodiment;
FIG. 4 is a schematic diagram of a session display interface according to an exemplary embodiment;
FIG. 5 is a schematic diagram of a session display interface according to an exemplary embodiment;
FIG. 6 is a schematic diagram of principle of displaying a session state according to an exemplary embodiment;
FIG. 7 is a block diagram of an apparatus for information prompt according to an exemplary embodiment; and
FIG. 8 is a structural block diagram of a terminal according to an exemplary embodiment.

### DETAILED DESCRIPTION

The data involved in the present disclosure is data authorized by a user or fully authorized by all parties.

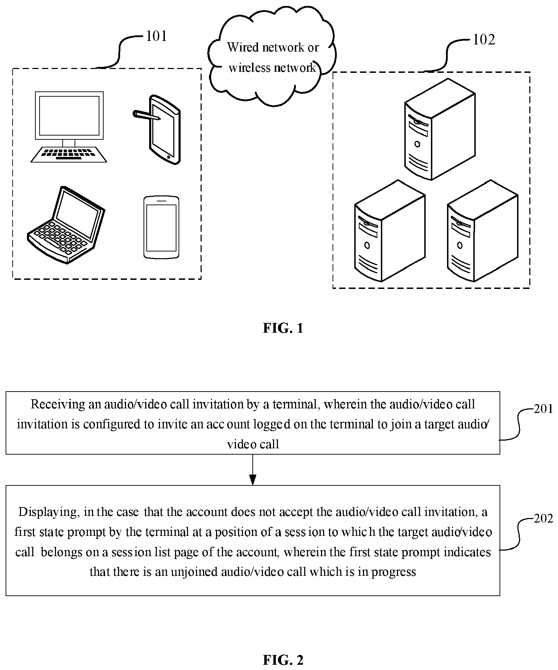

FIG. 1 is a schematic diagram of an implementation environment of a method for information prompt according to an exemplary embodiment. Referring to FIG. 1, the implementation environment includes a terminal 101.

The terminal 101 is at least one of a smart phone, a smart watch, a desktop computer, a laptop computer, a virtual reality terminal, an augmented reality terminal, a wireless terminal, a laptop portable computer, and the like. The terminal 101 has a communication function and can access a wired network or a wireless network. In some embodiments, the terminal 101 generally refers to any one of a plurality of terminals, and the embodiments of the present disclosure only take the terminal 101 as an example.

In some embodiments, the terminal 101 runs an instant messaging application that is provided with an instant messaging function. In the embodiment of the present disclosure, the terminal 101 is configured to receive an audio/video call invitation, and display a first state prompt at the position of a session to which a target audio/video call belongs on a session list page of an account in the case that the account logged on the terminal 101 does not accept the audio/video call invitation, to indicate that the account has an unjoined audio/video call which is in progress.

In some embodiments, the terminal 101 is directly or indirectly connected to a server 102 via wired or wireless communication, which is not limited in the embodiment of the present disclosure.

In some embodiments, the server 102 is a background server of the instant messaging application and is configured to provide background service for instant messaging application. In the embodiment of the present disclosure, the server 102 is configured to receive the audio/video call invitation, and, based on an account carried by the audio/video call invitation, send the audio/video call invitation to the terminal 101 corresponding to the account.

In some embodiments, the server 102 is an independent physical server, a server cluster or a distributed file system composed of a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform. The server 102 further includes other functional servers to provide more comprehensive and diverse services.

FIG. 2 is a flow chart of a method for information prompt according to an exemplary embodiment. As shown in FIG. 2, the method is executed by a computer device, wherein the computer device is the terminal shown in FIG. 1. Exemplarily, the method includes the following processes.

In 201, an audio/video call invitation is received by the terminal, wherein the audio/video call invitation is configured to invite an account logged on the terminal to join a target audio/video call.

In 202, in the case that the account does not accept the audio/video call invitation, a first state prompt is displayed by the terminal at a position of a session to which the target audio/video call belongs on a session list page of the account, wherein the first state prompt indicates that status of the session, that is, there is an unjoined audio/video call and the unjoined audio/video call is in progress.

In the technical solution of the embodiment of the present disclosure, the first state prompt indicates the status of an audio/video call and notifies that an audio/video call is going on and the user has not joined. Further, the first state prompt is shown at a session to which the target audio/video call belongs for easy identification among a plurality of sessions. In this way, the amount of information displayed on the session list page is increased. Thus, the user can quickly position or find a session to which a current audio/video call belongs conveniently, which avoids a problem that the user misses the session and improves the session efficiency.

In some embodiments, the case that the account does not accept the audio/video call invitation includes any one of circumstances: the account does not accept the audio/video call invitation within a target time period, a reject operation of the account on the audio/video call invitation is received, a close operation of the account on the audio/video call invitation is received, and the account is in a busy state.

In some embodiments, upon displaying, in the case that the account does not accept the audio/video call invitation, the first state prompt at the position of the session to which the target audio/video call belongs on the session list page of the account, the method further includes: displaying, in response to a trigger operation on the session to which the target audio/video call belongs, a session interface of the session to which the target audio/video call belongs; or in response to a trigger operation on the first state prompt, joining the account to the target audio/video call, or displaying the session interface of the session to which the target audio/video call belongs, or displaying the session interface of the session to which the target audio/video call belongs and positioning the session interface at an initiating position of the target audio/video call, or displaying the session interface of the session to which the target audio/video call belongs and displaying a positioning prompt, wherein the positioning prompt is configured to position the initiating position of the target audio/video call.

In some embodiments, upon displaying, in the case that the account does not accept the audio/video call invitation, the first state prompt at the position of the session to which the target audio/video call belongs on the session list page of the account, the method further includes: switching, in response to the account joining the target audio/video call, the first state prompt to a second state prompt at the position of the session to which the target audio/video call belongs on the session list page of the account, wherein the second state prompt is configured to indicate that the account has joined the target audio/video call.

In some embodiments, upon switching, in response to the account joining the target audio/video call, the first state prompt to the second state prompt at the position of the session to which the target audio/video call belongs on the session list page of the account, the method further includes: stopping displaying the second state prompt in response to the account exiting the target audio/video call.

In some embodiments, the method further includes: stopping displaying the first state prompt in response to ending of the target audio/video call.

In some embodiments, the session list page includes a session list region and a session top-sticky region, wherein the session list region is configured to display a list of sessions corresponding to the account, and the session top-sticky region is configured to stick the sessions corresponding to the account to the top for display; displaying the first state prompt at the position of the session to which the target audio/video call belongs on the session list page of the account includes at least one of: displaying the first state prompt on a session prompt item of the target audio/video call in the session list region; displaying the first state prompt on a session aggregation item in the session list region, wherein the session aggregation item is configured to display the sessions corresponding to the account in an aggregating fashion; and displaying the first state prompt on a session prompt item of the target audio/video call in the session top-sticky region.

In some embodiments, the method further includes at least one of: displaying an interaction notification prompt and an unread message prompt of the session to which the target audio/video call belongs on the session prompt item of the target audio/video call in the session list region, wherein the interaction notification prompt indicates that the session to which the target audio/video call belongs mentions the account, and the unread message prompt indicates the number of unread messages in session to which the target audio/video call belongs; displaying the interaction notification prompt and the unread message prompt of the session to which the target audio/video call belongs on the session aggregation item in the session list region; and displaying any one of a state prompt, the interaction notification prompt, and the unread message prompt of the session to which the target audio/video call belongs on the session prompt item of the target audio/video call in the session top-sticky region.

In some embodiments, a display priority of the state prompt is greater than a display priority of the interaction notification prompt, and the display priority of the interaction notification prompt is greater than a display priority of the unread message prompt; and the method further includes at least one of: sequentially displaying the state prompt, the interaction notification prompt, and the unread message prompt of the session to which the target audio/video call belongs, based on an arrangement order corresponding to the display priority, on the session prompt item of the target audio/video call in the session list region; sequentially displaying the state prompt, the interaction notification prompt, and the unread message prompt of the session to which the target audio/video call belongs, based on the arrangement order corresponding to the display priority, on the session aggregation item in the session list region; and displaying the prompt with the highest display priority on the session prompt item of the target audio/video call in the session top-sticky region.

In some embodiments, the method further includes: displaying any one of a group profile photo of the session to which the target audio/video call belongs, a profile photo of an account initiating the target audio/video call in the session to which the target audio/video call belongs, and a profile photo of any at least one account in the session to which the target audio/video call belongs at the position of the session to which the target audio/video call belongs on the session list page.

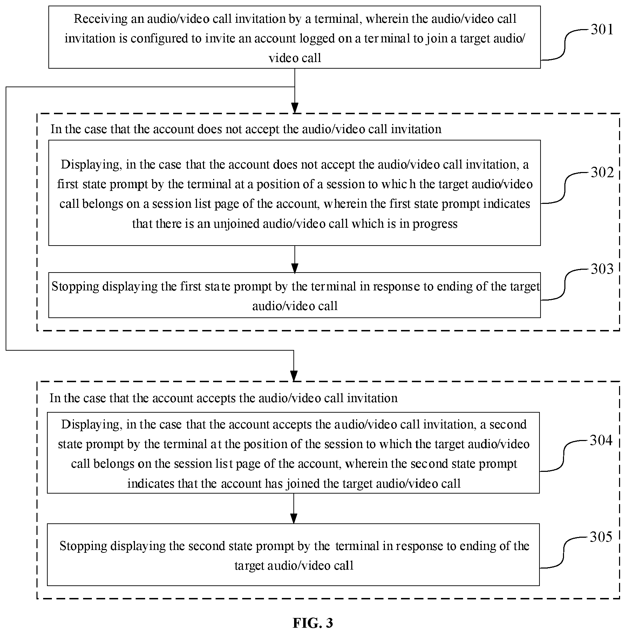

The above FIG. 2 only shows a basic flow of the present disclosure, and the solutions of the present disclosure are further described based on a specific embodiment. FIG. 3 is a flow chart of a method for information prompt according to an exemplary embodiment and illustrates a scheme for executing the terminal as shown in FIG. 1. Referring to FIG. 3, the method includes the following processes.

In 301, an audio/video call invitation is received by a terminal, wherein the audio/video call invitation is configured to invite an account logged on a terminal to join a target audio/video call.

In the embodiment of the present disclosure, the terminal runs an instant messaging application that provides an instant messaging function. The account logged on the terminal refers to a user account logged in an instant messaging application run by the terminal.

In some embodiments, the instant messaging application provides a one-to-one session function and a group session function. Accordingly, the target audio/video call is an audio/video call of a one-to-one session or an audio/video call of a group session. The one-to-one session refers to a session including two user accounts. In some embodiments, the one-to-one session is a session between an account logged on a terminal and a friend account, a session between an account logged on a terminal and a followed account, or a session between an account logged on a terminal and a subscribed account. A group refers to the combination of a plurality of user accounts. Accordingly, the group session refers to the session with the plurality of user accounts. In some embodiments, either the one-to-one session or the group session is provided with an audio/video call function. Taking the group session as an example, a user can have an audio session or a video session with other users in the group session. In some embodiments, the group session is provided with a function control for initiating the audio/video call. Any one of the user accounts in the group session can initiate the audio/video call of the group session based on the function control, and terminals corresponding to other user accounts can receive the audio/video call of the group session. The terminal corresponding to the user account refers to the terminal that the user account logs on. The embodiments of the present disclosure take the group session as an example for description in the following solutions.

In some embodiments, upon receiving the audio/video call invitation, the terminal displays prompt information of the audio/video call invitation.

It should be noted that upon the terminal receiving the audio/video call invitation, there may be two cases, namely, the case that the account logged on the terminal does not accept the audio/video call invitation and the case that the account that has logged on the terminal accepts the audio/video call invitation. In the case that the account does not accept the audio/video call invitation, a process of displaying the session by the terminal can refer to 302 and 303; in the case that the account accepts the audio/video call invitation, a process of displaying the session by the terminal can refer to 304 and 305.

In 302, a first state prompt is displayed by the terminal at a position of a session to which the target audio/video call belongs on a session list page of the account in the case that the account does not accept the audio/video call invitation, wherein the first state prompt indicates that there is an unjoined audio/video call which is in progress.

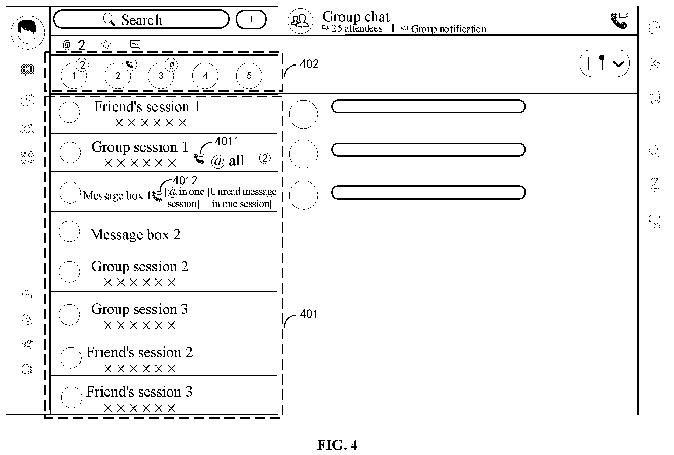

The session list page is configured to display the session corresponding to the account. For example, the session list page displays a group session or a Friend's session corresponding to the account. Exemplarily, FIG. 4 is a schematic diagram of a session display interface according to an exemplary embodiment. The session list page is displayed on the left side of the session display interface shown in FIG. 4, and displays a plurality of sessions corresponding to the account that has logged on the terminal, namely, "Friend's session 1, group session 1, ..., Friend's session 2, and Friend's session 3."

In some embodiments, the session to which the target audio/video call belongs refers to a one-to-one session to which the target audio/video call belongs or a group session to which the target audio/video call belongs. In some embodiments, the first state prompt is in a form of a first icon. For example, the first icon is a call icon in gray.

In some embodiments, the case that the account does not accept the audio/video call invitation includes any one of the following circumstances: the account does not accept the audio/video call invitation within a target time period, a reject operation of the account on the audio/video call invitation is received, a close operation of the account on the audio/video call invitation is received, and the account is in a busy state. Accordingly, a process of displaying the first state prompt by the terminal in the case that the account does not accept the audio/video call invitation refers to any one of the following four implementations.

In some embodiments, in the case that the account does not accept the audio/video call invitation within the target time period, the terminal displays, on the session list page, the first state prompt at the position of the session to which the target audio/video call belongs.

The target time period is a preset time period, such as 60 seconds. For example, in the case that the account does not accept the audio/video call invitation within 60 seconds, the terminal displays the first state prompt at the position of the session to which the target audio/video call belongs on the session list page.

In some embodiments, in response to receiving the reject operation of the account on the audio/video call invitation, the terminal display, on the session list page, the first state prompt is displayed at the position of the session to which the target audio/video call belongs.

In some embodiments, the prompt information of the audio/video call invitation includes a reject control, wherein the reject control is configured to reject the audio/video call invitation by triggering on the reject control. Accordingly, the reject operation of the account on the audio/video call invitation is a trigger operation of the account on the reject control. Accordingly, in some embodiments, in response to the trigger operation on the reject control by the account, the terminal displays the first state prompt at the position of the session to which the target audio/video call belongs on the session list page.

In some embodiments, in response to receiving the close operation of the account on the audio/video call invitation, the terminal displays, on the session list page, the first state prompt is displayed at the position of the session to which the target audio/video call belongs.

In some embodiments, the prompt information of the audio/video call invitation includes a close control, wherein the close control is configured to close the audio/video call invitation by triggering the close control. Accordingly, the close operation of the account on the audio/video call invitation is a trigger operation of the account on the close control. In other embodiments, the prompt information of the audio/video call invitation includes a later processing control, wherein the later processing control is configured to close the audio/video call invitation by triggering the later processing control. Accordingly, the close operation of the account on the audio/video call invitation is a trigger operation of the account on the later processing control.

Accordingly, in some embodiments, in response to the trigger operation on the close control by the account, the terminal displays the first state prompt at the position of the session to which the target audio/video call belongs on the session list page. In other embodiments, in response to the trigger operation on the later processing control by the account, the terminal displays the first state prompt at the position of the session to which the target audio/video call belongs on the session list page.

In some embodiments, in response to the busy state of the account, the first state prompt is displayed by the terminal at the position of the session to which the target audio/video call belongs on the session list page.

In some embodiments, the busy state of the account means that a working state of the account is the busy state, a do-not-disturb state, an in-a-meeting state, a leave state, and other non-idle states, or the busy state of the account means that the account is in an engaged state, such as an engaged voice state. It should be understood that the instant messaging application is provided with a function of setting the working state of the account.

In some embodiments, as described above, the unacceptance condition of the audio/video call may be determined based on no-operation or certain operations on the terminal. For example, the no-operation is a condition that the account does not accept the audio/video call invitation within the target time period. In another example, the no-operation is a condition indicated by a working state of the account. In some examples, a control such as a rejection control and/or a close control may be configured and displayed on the interface. In response to the determination of unacceptance, the first state prompt is displayed to the account to remind a user of the terminal that there is an ongoing audio/video call and he/she has not joined audio/video call yet. In this way, the first state prompt can be displayed at proper timing to achieve the goal of reminding the ongoing audio/video call while no disturbance to the user is caused.

In some embodiments, the session list page includes different session display regions, and thus, there are different display modes at the position of the session to which the target audio/video call belongs. Accordingly, a process of displaying the first status prompt can be implemented in other modes. Taking the session list page including a session list region and a session top-sticky region as an example, the process of displaying the first state prompt refers to any one of the following three implementations.

In one implementation, in the case that the session to which the target audio/video call belongs is disposed in the session list region of the session list page, the first state prompt is displayed by the terminal on a session prompt item of the target audio/video call in a session list region.

The session list region is configured to display a list of sessions corresponding to the account. Accordingly, the session prompt item displayed in the session list region may be a session prompt entry. Exemplarily, referring to FIG. 4, the session list region is a list region 401 shown in FIG. 4, in which a list of a plurality of sessions corresponding to the account is displayed. For example, taking the session to which the target audio/video call belongs as a "group session 1" as an example, the session prompt item of the target audio/video call is a chat frame of the "group session 1" as shown in FIG. 4, and the first state prompt is a "call icon 4011" displayed at the position of the chat frame of the "group session 1." It should be noted that in the drawing of the embodiment of the present disclosure, the black call icon is used for representing the call icon in gray, to indicate that there is an unjoined audio/video call.

In some embodiments, associated information of the target audio/video call is also displayed on the session prompt item of the target audio/video call in the session list region. The associated information is prompt information of a text session in the session to which the target audio/video call belongs. For example, the associated information includes an interaction notification prompt and an unread message prompt of the text session in the session to which the target audio/video call belongs. The corresponding process is that the terminal displays the interaction notification prompt and the unread message prompt of the session to which the target audio/video call belongs on the session prompt item of the target audio/video call in the session list region. In this way, the amount of information displayed on the session list page is increased, such that the user can conveniently know other information related to the session in time, and the session efficiency is improved.

The interaction notification prompt indicates that the session to which the target audio/video call belongs mentions the account. Exemplarily, referring to FIG. 4, the interaction notification prompt is "@ all" 4012 displayed at the position of the chat frame of the "group session 1" in FIG. 4. The unread message prompt indicates the number of unread messages in the session to which the target audio/video call belongs. Exemplarily, referring to FIG. 4, the unread message prompt is "②" 4013 displayed at the position of the chat frame of the "group sessions 1" in FIG. 4.

In some embodiments, a display priority of the state prompt is greater than a display priority of the interaction notification prompt, and the display priority of the interaction notification prompt is greater than a display priority of the unread message prompt. Accordingly, taking an example in which the display priority of the state prompt is greater than the display priority of the interaction notification prompt and the display priority of the interaction notification prompt is greater than the display priority of the unread message prompt, the method further includes that the terminal sequentially displays the state prompt, the interaction notification prompt, and the unread message prompt of the session to which the target audio/video call belongs, based on an arrangement order corresponding to the display priority, on the session prompt item of the target audio/video call in the session list region. In this way, all the prompts are displayed based on their display priorities, and the prompts with higher display priorities are preferentially displayed, such that the display accuracy of the session is improved, and the session efficiency is improved.

In some embodiments, on the session prompt item of the target audio/video call in the session list region, the terminal sequentially displays the state prompt, the interaction notification prompt, and the unread message prompt of the session to which the target audio/video call belongs, in a first display mode based on an arrangement order corresponding to the display priority. Alternatively, on the session prompt item of the target audio/video call in the session list region, the terminal sequentially displays the state prompt, the interaction notification prompt, and the unread message prompt of the session to which target audio/video call belongs, in a second display mode based on the arrangement order corresponding to the display priority. For example, the first display mode refers to a left-to-right display mode, and the second display mode refers to a right-to-left display mode.

Exemplarily, the terminal sequentially displays the state prompt, the interaction notification prompt, and the unread message prompt of the session to which the target audio/video call belongs from left to right based on the arrangement order corresponding to the display priority on the left of the session prompt item of the target audio/video call. Referring to FIG. 4, in the chat frame of the "group session 1" on the right side, the "call icon" 4011, the "@ all" 4012, and the "②" 4013 are sequentially arranged from left to right. It should be understood that the above embodiment takes an example in which all the state prompt, the interaction notification prompt, and the unread message prompt exist in the session to which the target audio/video call belongs to explain the process of displaying the session. In other embodiments, in the case that there is one or two of the above prompts in the session to which the target audio/video call belongs, the corresponding prompts are displayed based on the display priorities thereof.

In one implementation, in the case that the session to which the target audio/video call belongs is disposed in the session aggregation item, the first state prompt is displayed by the terminal on a session aggregation item in the session list region, wherein the session aggregation item is configured to display the sessions corresponding to the account in an aggregating fashion.

The session aggregation item displayed in the session list region is a session aggregation entry. The session aggregation item includes at least one session preset by the account. For example, the session aggregation item includes sessions that are preset by the user who is not interested in them. In some embodiments, the sessions in the session aggregation item are not displayed in the session list region. Displaying in the aggregating manner refers to the centralized display of the sessions corresponding to the account. For example, the terminal displays a plurality of sessions included in the session aggregation item in response to the trigger operation on the session aggregation item. Exemplarily, referring to FIG. 4, at least one session aggregation item is displayed in the "list region" 401, and is a chat frame of the "message box 1" or a chat frame of the "message box 2". For example, taking an example in which the session to which the target audio/video call belongs is disposed in a "message box 1," the session aggregation item of the target audio/video call is the chat frame of the "message box 1", and the first state prompt is a "call icon" 4014 displayed at the position of the chat frame of the "message box 1."

The above embodiments describe the process in which the terminal displays the first state prompt on the session aggregation item. In other embodiments, in the case that the session to which the target audio/video call belongs is disposed in the session aggregation item, the terminal displays the prompt information of the target audio/video call on the session aggregation item. For example, the content of the prompt information of the target audio/video call is "the meeting is in progress but not yet attended" or "one session has a meeting notification". In the embodiment of the present disclosure, in the case that the session to which the target audio/video call belongs is disposed in the session aggregation item, the first state prompt is not displayed on the session aggregation item, but only the prompt information of the session in general is displayed, such that it can avoid the problem of a session state prompt error or prompt conflict in the case that a plurality of sessions in the session aggregation item are in progress, thereby improving the session display effect. Further, the terminal presents the plurality of sessions included in the session aggregation item in response to the trigger operation on the session aggregation item, and displays the first state prompt at the position of the session to which the target audio/video call belongs.

In some embodiments, the associated information of the target audio/video call is also displayed on the session aggregation item in the session list region. The corresponding process is that the terminal displays the interaction notification prompt and the unread message prompt of the target audio/video call on the session aggregation item in the session list region. In this way, the amount of information displayed on the session list page is increased, such that the user can quickly position a session to which a current audio/video call belongs conveniently. Thus, the user can conveniently know other information related to the session in time, and the session efficiency is improved.

In some embodiments, taking an example in which the display priority of the state prompt is greater than the display priority of the interaction notification prompt and the display priority of the interaction notification prompt is greater than the display priority of the unread message prompt, the method further includes that the terminal sequentially displays the state prompt, the interaction notification prompt, and the unread message prompt of the session to which the target audio/video call belongs, based on an arrangement order corresponding to the display priority, on the session aggregation item in the session list region. In this way, all the prompts are displayed based on their display priorities, and the prompts with higher display priorities are preferentially displayed, such that the display accuracy of the session is improved, and the session efficiency is improved.

In some embodiments, the terminal further displays a message prompt of a target type on the session list page. For example, the message prompt of the target type is an urgent message prompt. For example, the terminal further displays the message prompt of the target type on the session aggregation item on the session list page. In some embodiments, the display priority of the message prompt of the target type is greater than the display priority of the state prompt.

In some embodiments, on the session aggregation item in the session list region, the terminal sequentially displays the state prompt, the interaction notification prompt, and the unread message prompt of the session to which the target audio/video call belongs, in a first display mode based on an arrangement order corresponding to the display priority. Alternatively, on the session aggregation item in the session list region, the terminal sequentially displays the state prompt, the interaction notification prompt, and the unread message prompt of the session to which the target audio/video call belongs, in a second display mode based on the arrangement order corresponding to the display priority.

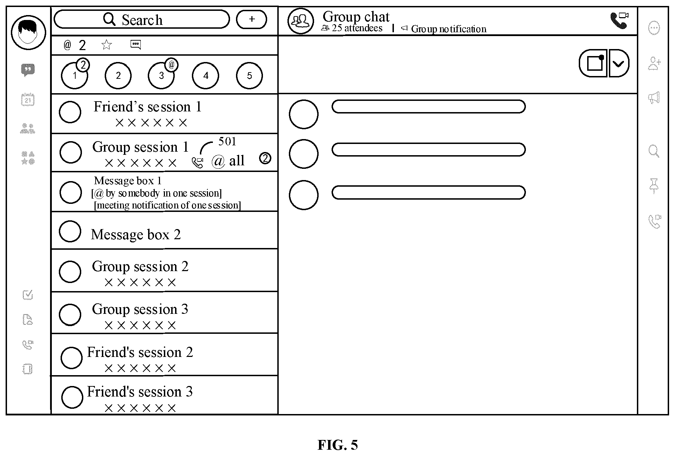

In some embodiments, the terminal sequentially displays the state prompt, the interaction notification prompt, and the unread message prompt of the target audio/video call from left to right based on the arrangement order corresponding to the display priority on the right side of the position of the session aggregation item. Exemplarily, referring to FIG. 4, in the chat frame of the "message box 1" in FIG. 4, on the right side, the "call icon" 4014, "@ by somebody in one session" 4015, and "an unread message in one session" 4016 are sequentially arranged from left to right. In some embodiments, the terminal sequentially displays the state prompt, the interaction notification prompt, and the unread message prompt of the target audio/video call from left to right based on the arrangement order corresponding to the display priority on the left side of the session aggregation item. Exemplarily, referring to FIG. 5, in the chat frame of the "message box 1", on the left side of the position, the "@ by somebody in one session" 501 and a "meeting notification of one session" 502 are sequentially arranged from left to right.

In one implementation, in the case that the session to which the target audio/video call belongs is disposed in a session top-sticky region of the session list page, the first state prompt is displayed by the terminal on the session prompt item of the target audio/video call in the session top-sticky region.

The session top-sticky region is configured to stick the sessions corresponding to the account to the top for display. In the embodiment of the present disclosure, the top-sticky mode includes a tile mode and a non-tile mode. In the non-tile mode, the session prompt item displayed in the session top-sticky region is a session top-sticky entry. In the tile mode, the session prompt item displayed in the session top-sticky region is a session prompt icon, such as a profile photo icon. In the non-tile mode, a way of displaying the first state prompt of the target audio/video call refers to the above content of displaying the first state prompt in the session list region, which is not repeated herein. The tile mode is taken as an example below to explain the process of displaying the session.

Exemplarily, referring to FIG. 4, the session top-sticky region is a "top-sticky region" 402. In the "top-sticky region" 402, a plurality of session prompt items corresponding to the account are displayed, and are a profile photo icon 1, profile photo icon 2, ..., and profile photo icon 5. For example, taking the session prompt item of the target audio/video call as the profile photo icon 2 as an example, the first state prompt is the "call icon" 4021 displayed in the upper right corner of the profile photo icon 2.

In some embodiments, the associated information of the target audio/video call can also be displayed on the session prompt item of the target audio/video call in the session top-sticky region. In the non-tile mode, the way of displaying the associated information of the target audio/video call can refer to the above content of displaying the associated information in the session list region, which is not repeated herein. The process of displaying the associated information of the target audio/video call is described below by taking the tile mode as an example. The corresponding process is that the terminal displays any one of the state prompt, the interaction notification prompt, and the unread message prompt of the target audio/video call on the session prompt item of the target audio/video call in the session top-sticky region. In this way, the amount of information displayed on the session list page is increased, such that the user can quickly position a session to which a current audio/video call belongs conveniently. Thus, the user can conveniently know other information related to the session in time, and the session efficiency is improved.

In some embodiments, taking an example in which the display priority of the state prompt is greater than the display priority of the interaction notification prompt and the display priority of the interaction notification prompt is greater than the display priority of the unread message prompt, the method further includes that the terminal displays the prompt with the highest display priority on the session prompt item of the target audio/video call in the session top-sticky region. In this way, all the prompts are displayed based on their display priorities, and the prompts with higher display priorities are preferentially displayed, such that the display accuracy of the session is improved, and the session efficiency is improved.

In the above embodiment, in the case that the session to which the target audio/video call belongs is disposed in the session list region of the session list page, the first state prompt of the target audio/video call is displayed at the position of the session prompt item in response to the session to which the target audio/video call belongs being disposed on the session prompt item or is displayed at the position of the session aggregation item in response to the session to which the target audio/video call belongs being disposed on the session aggregation item. In the case that the session to which the target audio/video call belongs is disposed in the session top-sticky region of the session list page, the first state prompt of the target audio/video call is displayed on the session prompt item of the target audio/video call. Thus, the amount of information displayed on the page is increased, and the accurate display of the session state is ensured.

In some embodiments, for the ways of displaying the session shown in the above, the terminal also performs a combined display based on two or three of the above three implementations. For example, the terminal displays the first state prompt on the session prompt item of the target audio/video call in the session list region of the session list page of the account, and at the same time, displays the first state prompt on the session prompt item of the target audio/video call in the session top-sticky region of the session list page of the account. Alternatively, the terminal displays the first state prompt on the session aggregation item in the session list region of the session list page of the account, and at the same time, displays the first state prompt on the session prompt item of the target audio/video call in the session top-sticky region of the session list page of the account.

In some embodiments, the terminal displays any one of a group profile photo of the session to which the target audio/video call belongs, a profile photo of an account initiating the target audio/video call in the session to which the target audio/video call belongs, and a profile photo of any at least one account in the session to which the target audio/video call belongs at the position of the session to which the target audio/video call belongs on the session list page. In some embodiments, the terminal displays any one of the group profile photo of the session to which the target audio/video call belongs, the profile photo of the account initiating the target audio/video call in the session to which the target audio/video call belongs, and the profile photo of any at least one account in the session to which the target audio/video call belongs on the session prompt item of the target audio/video call in the session list region of the session list page. In some other embodiments, the terminal displays any one of the group profile photo of the session to which the target audio/video call belongs, the profile photo of the account initiating the target audio/video call in the session to which the target audio/video call belongs, and the profile photo of any at least one account in the session to which the target audio/video call belongs on the session aggregation item in the session list region of the session list page. In some other embodiments, the terminal displays any one of the group profile photo of the session to which the target audio/video call belongs, the profile photo of the account initiating the target audio/video call in the session to which the target audio/video call belongs, and the profile photo of any at least one account in the session to which the target audio/video call belongs on the session prompt item of the target audio/video call in the session top-sticky region of the session list page.

In a specific example, in the case that the session to which the target audio/video call belongs is disposed in the session top-sticky region of the session list page, taking the tile mode as an example, the terminal displays any one of the group profile photo of the session to which the target audio/video call belongs, the profile photo of the account initiating the target audio/video call in the session to which the target audio/video call belongs, and the profile photo of any at least one account in the session to which the target audio/video call belongs in the session top-sticky region of the session list page of the account. The group profile photo of the session to which the target audio/video call belongs is a preset fixed profile photo. The account profile photo of the any at least one account in the session to which the target audio/video call belongs is the profile photo of any one account in the session to which the target audio/video call belongs or a profile photo composed of profile photos of any target number of accounts in the session to which the target audio/video call belongs, wherein the target number is a preset fixed number, such as four.

In the above embodiment, various types of profile photos are provided for display, such that display styles of the session are enriched.

In 303, the display of the first state prompt is stopped by the terminal in response to ending of the target audio/video call.

303 is a process of automatically stopping displaying the first state prompt in the case that the target audio/video call ends. In this way, in the case that the target audio/video call ends, the display of the first state prompt is stopped to ensure that the display of the state prompt is synchronized with the audio/video call. Thus, the real-time and accurate display of the session state is ensured.

In other embodiments, after 302, the terminal switches the first state prompt to a second state prompt at the position of the session to which the target audio/video call belongs on the session list page of the account in response to the account joining the target audio/video call, wherein the second state prompt is configured to indicate that the account has joined the target audio/video call. In this way, the synchronous display of the session state can be ensured by switching the display of the session state, thereby ensuring the real-time and accurate display of the session state.

In some embodiments, the second state prompt is in a form of a second icon. For example, the second icon is a call icon in color. Exemplarily, FIG. 5 is a schematic diagram of a session display interface according to an exemplary embodiment. A session list page is displayed on the left side of the session display interface shown in FIG. 5. Referring to FIG. 5, taking the session to which the target audio/video call belongs as the "group session 1" as an example, the session to which the target audio/video call belongs is a chat frame of the "group session 1" as shown in FIG. 5, and the second state prompt is a "call icon" 5013 displayed at the position of the chat frame of the "group session 1." It should be noted that in the figures of the embodiment of the present disclosure, the white call icon (i.e., a call icon with blank space inside) is used for representing the call icon in color, to indicate that the audio/video calls are in progress.

The terminal also quickly positions the session interface of the target audio/video call based on a trigger operation on the session to which the target audio/video call belongs or a trigger operation on the first state prompt. The corresponding process include: in some embodiments, the terminal displays a session interface of the session to which the target audio/video call belongs in response to the trigger operation on the session to which the target audio/video call belongs; and in other embodiments, the terminal displays the session interface of the session to which the target audio/video call belongs in response to the trigger operation on the first state prompt. In this way, by the trigger operation on the session to which the target audio/video call belongs or the trigger operation on the first state prompt, the session interface of the session can be quickly positioned, such that the user can quickly join the audio/video call in the case that he/she needs to join the audio/video call, and the human-computer interaction efficiency is improved. Accordingly, a process of the account joining the target audio/video call is that the terminal causes the account to join the target audio/video call in response to a session joined operation of the account in the session interface. Further, in some embodiments, the terminal stops displaying the second state prompt in response to the account exiting the target audio/video call. In this way, in the case that the account logs out the target audio/video call, the display of the second state prompt is stopped, such that the user is prevented from mistakenly touching the session to which the target audio/video call belongs, thereby improving the operation experience of the user.

In some embodiments, the terminal also quickly causes the account to join the target audio/video call based on the trigger operation on the first state prompt. The corresponding process is that the terminal causes the account to join the target audio/video call in response to the trigger operation on the first state prompt. In this way, through the trigger operation on the first state prompt, the user can quickly join the audio/video call, and the human-computer interaction efficiency is improved.

In other embodiments, the terminal also quickly positions an initiating position of the target audio/video call based on the trigger operation on the first state prompt. The corresponding process is that the terminal displays the session interface of the session to which the target audio/video call belongs and positions the initiating position of the target audio/video call in response to the trigger operation on the first state prompt. A join control for the target audio/video call is displayed at the initiating position and is configured to cause the account to join the target audio/video call. Accordingly, the process of causing the account to join the target audio/video call is that the terminal causes the account to join the target audio/video call in response to the trigger operation on the join control at the initiating position. In this way, through the trigger operation on the first state prompt, the initiating position of the target audio/video call is displayed, and further, the user can quickly join the audio/video call based on the join control at the initiating position, such that the human-computer interaction efficiency is improved.

In other embodiments, the terminal also displays the prompt of the initiating position of the target audio/video call based on the trigger operation on the first state prompt, to quickly position the initiating position of the target audio/video call. The corresponding process is that the terminal displays the session interface of the session to which the target audio/video call belongs and displays the positioning prompt in response to the trigger operation on the first state prompt. The positioning prompt is configured to position the initiating position of the target audio/video call. Accordingly, the process of causing the account to join the target audio/video call is that the terminal displays the initiating position of the target audio/video call in response to the trigger operation on the positioning prompt, and causes the account to join the target audio/video call in response to the trigger operation on the joining control at the initiating position. In this way, through the trigger operation on the first state prompt, the initiating position of the target audio/video call can be quickly triggered and displayed, and further, the user can quickly join the audio/video call based on the join control at the initiating position, such that the human-computer interaction efficiency is improved.

In the above embodiment, in the case that the account does not accept the audio/video call invitation, the user is reminded of the unjoined audio/video call by displaying the first state prompt, such that the amount of information displayed on the session list page is increased. Thus, the user can quickly position a session to which a current audio/video call belongs conveniently. In this way, after the user misses the invitation time, a meeting state prompt can also be provided to the user on the session list page, such that the user can quickly position the unjoined session. Therefore, the problem that the user misses the session can be avoided, and the session efficiency is improved.

In the case that the account accepts the audio/video call invitation, a process of displaying the session by the terminal can refer to 304 and 305.

In 304, in the case that the account accepts the audio/video call invitation, a second state prompt is displayed by the terminal at the position of the session to which the target audio/video call belongs on the session list page of the account, wherein the second state prompt is configured to indicate that the account has joined the target audio/video call.

In some embodiments, the account accepting the audio/video call invitation means that the consent of the account to the audio/video call invitation is received. In some embodiments, the prompt information of the audio/video call invitation includes a consent control, and the consent operation of the account on the audio/video call invitation is a trigger operation of the account on the consent control. Accordingly, in some embodiments, in response to the trigger operation on the consent control by the account, the terminal displays the second state prompt at the position of the session to which the target audio/video call belongs on the session list page of the account.

In some embodiments, the session list page includes different session display regions, and thus, there are different display modes at the position of the session to which the target audio/video call belongs. Accordingly, a process of displaying the second status prompt is implemented in other modes, and the corresponding process can refer to the followings.

In some embodiments, in the case that the session to which the target audio/video call belongs is disposed in a session list region of the session list page, the second state prompt is displayed by the terminal on the session prompt item of the target audio/video call in the session list region.

In some embodiments, the associated information of the target audio/video call can also be displayed on the session prompt item of the target audio/video call in the session list region. The corresponding process refers to the content of displaying the associated information on the session prompt item of the target audio/video call in the session list region in 302, which is not repeated herein.

In some embodiments, in the case that the session to which the target audio/video call belongs is disposed in a session aggregation item, the second state prompt is displayed by the terminal on the session aggregation item in the session list region.

In some embodiments, the associated information of the target audio/video call is also displayed on the session aggregation item in the session list region. The corresponding process refers to the content of displaying the associated information on the session aggregation item in the session list region in 302, which is not repeated herein. In some embodiments, the terminal also displays the prompt information of the session state on the session aggregation item. For example, the content of the prompt information of the session state is "in the meeting".

In some embodiments, in the case that the session to which the target audio/video call belongs is disposed in a session top-sticky region of the session list page, the second state prompt is displayed by the terminal on the session prompt item of the target audio/video call in the session top-sticky region.

In some embodiments, the associated information of the target audio/video call is also displayed on the session prompt item of the target audio/video call in the session top-sticky region. The corresponding process refers to the content of displaying the associated information on the session prompt item of the target audio/video call in the session top-sticky region in 302, which is not repeated herein.

In 305, the display of the second state prompt is stopped by the terminal in response to ending of the target audio/video call.

305 is a process of automatically stopping displaying the second state prompt in the case that the target audio/video call ends. In this way, it is ensured that the display of the state prompt is synchronized with the audio/video call.

In other embodiments, after 304, the terminal displays the session interface of the session to which the target audio/video call belongs in response to the trigger operation on the session to which the target audio/video call belongs. In this way, the user can quickly position the session interface of the session to which the target audio/video call belongs.

In the above embodiment, in the case that the account accepts the audio/video call invitation, the user is reminded that he/she is attending the audio/video call by displaying the second state prompt, such that the amount of information displayed on the session list page is increased. Thus, the user can quickly position a session to which a current audio/video call belongs. In this way, in a process of enabling the user to attend a meeting, the user can quickly position the current session through the prompt of the meeting state on the session list page, thereby conveniently viewing information materials or session records in the session interface of the session subsequently. Therefore, the transfer efficiency of office information is improved.

In one aspect of the present disclosure, a method for information prompt for an audio/video call, is provided. The method includes: receiving an audio/video call invitation, wherein the audio/video call invitation is configured to invite an account logged on a terminal to join the audio/video call; determining whether an unacceptance condition of the audio/video call is met; and in response to the unacceptance condition being met, displaying, on a session list page of the account, a first state prompt on a session at a position of a session to which the audio/video call belongs, wherein the first state indicates that the audio/video call is in progress and a user has not joined the audio/video call, and wherein the session list page is configured to display a plurality of audio/video call sessions.

In some embodiments, the unacceptance condition is one of the following conditions: the account does not accept the audio/video call within a time period, a reject operation of the account on the audio/video call invitation is received in response to a trigger operation on a rejection control displayed on the terminal, a close operation of the account on the audio/video call invitation is received in response to a trigger operation on a close control displayed on the terminal, and the account is in a busy state.

As the first state prompt is display in response to the unacceptance condition being met, the user can be reminded of the unjoined call at a proper timing, thereby improving the user experience.

In some embodiments, a session list page is displayed and the session list page lists a plurality of sessions of the audio/video calls. The first state prompt is displayed at a position of session to which the audio/video calls belongs (for example, the first state prompt is displayed adjacent to the session of the target audio/video). The addition of the first state prompt on the session of the audio/video call makes the display of the session to which the audio/video calls belongs appears different from other sessions on the session list page. In this way, not only the amount of information is increased on the session list page, but also the configuration of the display of the session list page makes the user easier to identify the session that is in progress and the user has not been joined the session.

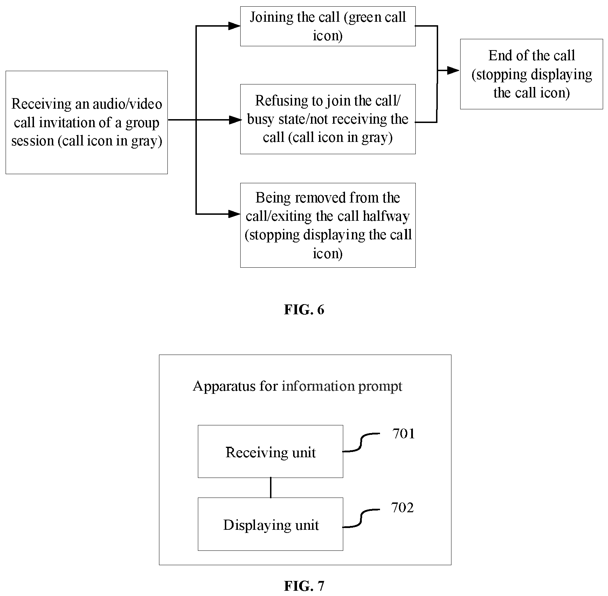

Exemplarily, FIG. 6 is a schematic diagram of principle of displaying a session state according to an exemplary embodiment. Referring to FIG. 6, in the case that a terminal receives an audio/video call invitation of a group session, a call icon in gray is displayed at the position of a session to which a target audio/video call belongs on a session list page. It should be understood that at this time, a call icon in color (such as green) is displayed at the position of the session to which the target audio/video call belongs on the session list page of an account initiating the target audio/video call in the group session. In the case that the user joins the target audio/video call, the call icon in color (such as green) is displayed at the position of the session to which the target audio/video call belongs on the session list page. In the case that the user refuses to join the target audio/video call, or the user does not accept the audio/video call invitation within a certain time period, or the user is in a busy state, the call icon in gray is displayed at the position of the session to which the target audio/video call belongs on the session list page. In the case that the user is removed from the audio/video call or logs out the audio/video call halfway, the display of the call icon is stopped, and the display of the call icon is automatically stopped at the end of the audio/video call.

In the technical solution of the embodiment of the present disclosure, the amount of information displayed on the session list page is increased. Thus, the user can quickly position a session to which a current audio/video call belongs conveniently, which avoids a problem that the user misses the session and improves the session efficiency.

FIG. 7 is a block diagram of an apparatus for information prompt according to an exemplary embodiment. Referring to FIG. 7, the apparatus includes a receiving unit 701 and a displaying unit 702.

The receiving unit 701 is configured to receive an audio/video call invitation, wherein the audio/video call invitation is configured to invite an account logged on a terminal to join a target audio/video call.

The displaying unit 702 is configured to display, in the case that the account does not accept the audio/video call invitation, a first state prompt at the position of a session to which the target audio/video call belongs on a session list page of the account, wherein the first state prompt indicates there is an unjoined audio/video call which is in progress.

In the technical solution of the embodiment of the present disclosure, the amount of information displayed on the session list page is increased. Thus, the user can quickly position a session to which a current audio/video call belongs conveniently, which avoids a problem that the user misses the session and improves the session efficiency.

In some embodiments, the case that the account does not accept the audio/video call invitation includes one of cases that: the account does not accept the audio/video call invitation within a target time period, a reject operation of the account on the audio/video call invitation is received, a close operation of the account on the audio/video call invitation is received, and the account is in a busy state.

In some embodiments, the displaying unit 702 is further configured to display, in response to a trigger operation on the session to which the target audio/video call belongs, a session interface of the session to which the target audio/video call belongs; or in response to a trigger operation on the first state prompt, join the target audio/video call, or display the session interface of the session to which the target audio/video call belongs, or display the session interface of the session to which the target audio/video call belongs and position the session interface at an initiating position of the target audio/video call, or display the session interface of the session to which the target audio/video call belongs and display a positioning prompt, wherein the positioning prompt is configured to position the initiating position of the target audio/video call.

In some embodiments, the apparatus further includes: a switching unit, configured to switch, in response to the account joining the target audio/video call, the first state prompt to a second state prompt at the position of the session to which the target audio/video call belongs on the session list page of the account, wherein the second state prompt is configured to indicate that the account has joined the target audio/video call.

In some embodiments, the displaying unit 702 is further configured to stop displaying the second state prompt in response to the account exiting the target audio/video call.

In some embodiments, the displaying unit 702 is further configured to stop displaying the first state prompt in response to ending of the target audio/video call.

In some embodiments, the session list page includes a session list region and a session top-sticky region, wherein the session list region is configured to display a list of sessions corresponding to the account, and the session top-sticky region is configured to stick the sessions corresponding to the account to the top for display; the displaying unit 702 is further configured to perform at least one of: displaying the first state prompt on a session prompt item of the target audio/video call in the session list region; displaying the first state prompt on a session aggregation item in the session list region, wherein the session aggregation item is configured to display the sessions corresponding to the account in an aggregating fashion; and displaying the first state prompt on a session prompt item of the target audio/video call in the session top-sticky region.

In some embodiments, the displaying unit 702 is further configured to perform at least one of: displaying an interaction notification prompt and an unread message prompt of the session to which the target audio/video call belongs on the session prompt item of the target audio/video call in the session list region, wherein the interaction notification prompt indicates that the session to which the target audio/video call belongs mentions the account, and the unread message prompt indicates the number of unread messages in the session to which the target audio/video call belongs; displaying the interaction notification prompt and the unread message prompt of the session to which the target audio/video call belongs on the session aggregation item in the session list region; and displaying any one of a state prompt, the interaction notification prompt, and the unread message prompt of the session to which the target audio/video call belongs on the session prompt item of the target audio/video call in the session top-sticky region.

In some embodiments, a display priority of the state prompt is greater than a display priority of the interaction notification prompt, and the display priority of the interaction notification prompt is greater than a display priority of the unread message prompt. The displaying unit 702 is further configured to perform at least one of: sequentially displaying the state prompt, the interaction notification prompt, and the unread message prompt of the session to which the target audio/video call belongs, based on an arrangement order corresponding to the display priority, on the session prompt item of the target audio/video call in the session list region; sequentially displaying the state prompt, the interaction notification prompt, and the unread message prompt of the session to which the target audio/video call belongs, based on the arrangement order corresponding to the display priority, on the session aggregation item in the session list region; and displaying the prompt with the highest display priority on the session prompt item of the target audio/video call in the session top-sticky region.

In some embodiments, the displaying unit 702 is further configured to display any one of a group profile photo of the session to which the target audio/video call belongs, a profile photo of an account initiating the target audio/video call in the session to which the target audio/video call belongs, and a profile photo of any at least one account in the session to which the target audio/video call belongs at the position of the session to which the target audio/video call belongs on the session list page.

It should be noted that in the case that the apparatus for information prompt according to the above embodiments displays sessions, only the division of the above functional modules is taken as an example for description. In practice, the above functions can be assigned to the different functional modules to be achieved according to demands. That is, the internal structure of the apparatus is divided into different functional modules to achieve all or part of the functions described above. In addition, the apparatus for information prompt and the method for information prompt according to the above embodiments belong to the same concept. Specific implementation processes of the apparatus may refer to the embodiments of the method, the details of which are not repeated herein.

A computer device is provided in the embodiment of the present disclosure. The computer device includes one or more processors, and a memory configured to store one or more program codes executable by the one or more processors; wherein the one or more processors are configured to execute the one or more program codes to perform the above-mentioned method for information prompt.

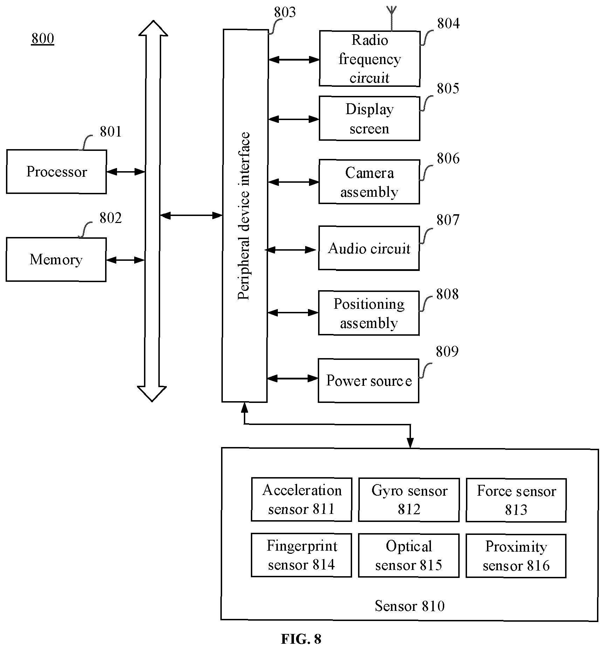

In some embodiments, a computer device according to an embodiment of the present disclosure is a terminal. FIG. 8 is a structural block diagram of a terminal 800 according to an exemplary embodiment. The terminal 800 is a smart phone, a tablet computer, a moving picture experts group audio layer III (MP3) player, a moving picture experts group audio layer IV (MP4) player, a laptop, or a desk computer. In some embodiments, the terminal 800 is also called a user device, a portable terminal, a laptop terminal, a desk terminal, or the like.

Generally, the terminal 800 includes a processor 801 and a memory 802.

The processor 801 includes one or more processing cores, such as a 4-core processor and an 8-core processor. In some embodiments, the processor 801 is implemented by at least one of hardware forms of a digital signal processor (DSP), a field-programmable gate array (FPGA), and a programmable logic array (PLA). In some embodiments, the processor 801 also includes a main processor and a coprocessor. The main processor is a processor for processing the data in an awake state, and is also called a central processing unit (CPU). The coprocessor is a low-power-consumption processor for processing the data in a standby state. In some embodiments, the processor 801 is integrated with a graphics processing unit (GPU), which is configured to render and draw the content that needs to be displayed by a display screen. In some embodiments, the processor 801 also includes an Artificial Intelligence (AI) processor configured to process computational operations related to machine learning.

The memory 802 includes one or more computer-readable storage media, which may be non-transitory. In some embodiments, the memory 802 further includes a high-speed random access memory, as well as a non-volatile memory, such as one or more disk storage devices and flash storage devices. In some embodiments, a non-transitory computer-readable storage medium in the memory 802 is configured to store at least one program code. The at least one program code is configured to be executed by the processor 801 to perform the process executed by the terminal in the method for information prompt according to the method embodiments of the present disclosure.

In some embodiments, the terminal 800 also optionally includes a peripheral device interface 803 and at least one peripheral device. In some embodiments, the processor 801, the memory 802, and the peripheral device interface 803 are connected by a bus or a signal line. In some embodiments, each peripheral device is connected to the peripheral device interface 803 via a bus, a signal line, or a circuit board. In some embodiments, the peripheral device includes at least one of a radio frequency circuit 804, a display screen 805, a camera assembly 806, an audio circuit 807, a positioning assembly 808, and a power source 809.

The peripheral device interface 803 is configured to connect at least one peripheral device associated with an input/output (I/O) to the processor 801 and the memory 802. In some embodiments, the processor 801, the memory 802, and the peripheral device interface 803 are integrated on the same chip or circuit board. In some embodiments, any one or two of the processor 801, the memory 802, and the peripheral device interface 803 are implemented on a separate chip or circuit board, which is not limited in this embodiment of the present disclosure.

The radio frequency circuit 804 is configured to receive and transmit a radio frequency (RF) signal, which is also referred to as an electromagnetic signal. The radio frequency circuit 804 is communicated with a communication network and other communication devices via the electromagnetic signal. The radio frequency circuit 804 converts an electrical signal to the electromagnetic signal for transmission or converts the received electromagnetic signal to the electrical signal. In some embodiments, the radio frequency circuit 804 includes an antenna system, an RF transceiver, one or more amplifiers, a tuner, an oscillator, a digital signal processor, a coder/decoder (codec) chipset, a subscriber identity module (SIM) card, and the like. The radio frequency circuit 804 is communicated with other terminals in accordance with at least one wireless communication protocol. The wireless communication protocol includes, but is not limited to, a metropolitan area network, various generations of mobile communication networks (2G, 3G, 4G, and 5G), a wireless local area network (LAN), and/or a wireless fidelity (Wi-Fi) network. In some embodiments, the radio frequency circuit 804 also includes a near-field communication (NFC) related circuit, which is not limited in the present disclosure.

The display screen 805 is configured to display a user interface (UI). In some embodiments, the UI includes graphics, texts, icons, videos, and any combination thereof. In the case that the display screen 805 is a touch display screen, the display screen 805 also can acquire a touch signal on or over the surface of the display screen 805. In some embodiments, the touch signal is input into the processor 801 as a control signal for processing. In this case, the display screen 805 is also configured to provide virtual buttons and/or virtual keyboards, which are also referred to as soft buttons and/or soft keyboards. In some embodiments, one display screen 805 is disposed on the front panel of the terminal 800. In some other embodiments, at least two display screens 805 are disposed on different surfaces of the terminal 800 respectively or in a folded design. In further embodiments, the display screen 805 is a flexible display screen disposed on the bending or folded surface of the terminal 800. Moreover, in some embodiments, the display screen 805 may have an irregular shape other than a rectangle, that is, the display screen 605 may be irregular-shaped. In some embodiments, the display screen 805 is a liquid crystal display (LCD) screen, an organic light-emitting diode (OLED) screen, or the like.

The camera assembly 806 is configured to capture images or videos. In some embodiments, the camera assembly 806 includes a front camera and a rear camera. Usually, the front camera is arranged on the front panel of the terminal and the rear camera is arranged on the back surface of the terminal. In some embodiments, at least two rear cameras are arranged, and each of the at least two rear cameras is at least one of a main camera, a depth-of-field camera, a wide-angle camera, and a telephoto camera, to realize a background blurring function realized by fusion of the main camera and the depth-of-field camera, panoramic shooting and virtual reality (VR) shooting functions by fusion of the main camera and the wide-angle camera, or other fusion shooting functions. In some embodiments, the camera assembly 806 further includes a flashlight. The flashlight is a mono-color temperature flashlight or a two-color temperature flashlight. The two-color temperature flashlight is a combination of a warm flashlight and a cool flashlight and can be used for light compensation at different color temperatures.

The audio circuit 807 includes a microphone and a loudspeaker. The microphone is configured to capture sound waves of users and the environment, and convert the sound waves to electrical signals which are input to the processor 801 for processing, or input into the radio frequency circuit 804 for voice communication. In some embodiments, for stereo acquisition or noise reduction, there are a plurality of microphones, which are respectively arranged at different parts of the terminal 800. In some embodiments, the microphone is also an array microphone or an omnidirectional acquisition microphone. In some embodiments, the loudspeaker is configured to convert the electrical signal from the processor 801 or the radio frequency circuit 804 to the sound waves. In some embodiments, the loudspeaker is a conventional film loudspeaker or a piezoelectric ceramic loudspeaker. In the case that the loudspeaker is the piezoelectric ceramic loudspeaker, the electrical signals can be converted into not only human-audible sound waves but also the sound waves which are inaudible to humans for ranging and the like. In some embodiments, the audio circuit 807 also includes a headphone jack.

The positioning assembly 808 is configured to locate the current geographic location of the terminal 800 to implement navigation or a location-based service (LBS). In some embodiments, the positioning assembly 808 is the United States' global positioning system (GPS), Russia's global navigation satellite system (GLONASS), China's BeiDou navigation satellite system (BDS), and the European Union's Galileo system.

The power source 809 is configured to supply power for various components in the terminal 800. In some embodiments, the power source 809 is an alternating current, a direct current, a disposable battery, or a rechargeable battery. In some embodiments, in the case that the power source 809 includes the rechargeable battery, the rechargeable battery supports wired charging or wireless charging. The rechargeable battery also supports the fast-charging technology.

In some embodiments, the terminal 800 also includes one or more sensors 810. The one or more sensors 810 include, but are not limited to, an acceleration sensor 811, a gyro sensor 812, a force sensor 813, a fingerprint sensor 814, an optical sensor 815, and a proximity sensor 816.

The acceleration sensor 811 is configured to detect magnitudes of accelerations on three coordinate axes of a coordinate system established by the terminal 800. For example, the acceleration sensor 811 is configured to detect components of a gravitational acceleration on the three coordinate axes. The processor 801 controls the display screen 805 to display a user interface in a landscape view or a portrait view based on a gravity acceleration signal acquired by the acceleration sensor 811. In some embodiments, the acceleration sensor 811 is also configured to acquire motion data of a game or a user.

The gyro sensor 812 is configured to detect a body direction and a rotation angle of the terminal 800, and cooperates with the acceleration sensor 811 to acquire a 3D motion of the user on the terminal 800. Based on the data acquired by the gyro sensor 812, the processor 801 achieves the following functions: motion sensing (such as changing the UI according to a user's tilt operation), image stabilization during shooting, game control, and inertial navigation.

The force sensor 813 is disposed on a side frame of the terminal 800 and/or a lower layer of the display screen 805. In the case that the force sensor 813 is disposed on the side frame of the terminal 800, a user's holding signal to the terminal 800 can be detected. The processor 801 can perform left-right hand recognition or quick operation according to the holding signal acquired by the force sensor 813. In the case that the force sensor 813 is disposed on the lower layer of the display screen 805, the processor 801 controls an operable control on the UI based on a user's press operation on the display screen 805. The operable control includes at least one of a button control, a scroll bar control, an icon control, and a menu control.

The fingerprint sensor 814 is configured to acquire a user's fingerprint. The processor 801 identifies the user's identity based on the fingerprint acquired by the fingerprint sensor 814, or the fingerprint sensor 814 identifies the user's identity based on the acquired fingerprint. In the case that the user's identity is identified as trusted, the processor 801 authorizes the user to perform related sensitive operations, such as unlocking the screen, viewing encrypted information, downloading software, paying, and changing settings. In some embodiments, the fingerprint sensor 814 is provided on the front, back, or side of the terminal 800. In the case that the terminal 800 is provided with a physical button or a manufacturer's logo, the fingerprint sensor 814 is integrated with the physical button or the manufacturer's logo.

The optical sensor 815 is configured to capture ambient light intensity. In some embodiments, the processor 801 controls the display brightness of the display screen 805 based on the ambient light intensity captured by the optical sensor 815. In some embodiments, in the case that the ambient light intensity is higher, the display brightness of the display screen 805 is increased; and in the case that the ambient light intensity is lower, the display brightness of the display screen 805 is decreased. In some other embodiment, the processor 801 also dynamically adjusts shooting parameters of the camera assembly 806 based on the ambient light intensity captured by the optical sensor 815.

The proximity sensor 816, also referred to as a distance sensor, is usually disposed on the front panel of the terminal 800. The proximity sensor 816 is configured to capture a distance between the user and a front surface of the terminal 800. In some embodiments, in the case that the proximity sensor 816 detects that the distance between the user and the front surface of the terminal 800 gradually decreases, the processor 801 controls the display screen 805 to switch from a screen-on state to a screen-off state. In the case that the proximity sensor 816 detects that the distance between the user and the front surface of the terminal 800 gradually increases, the processor 801 controls the display screen 805 to switch from the screen-off state to the screen-on state.

In some embodiments, a computer-readable storage medium including a program code is further provided, such as a memory including the program code. The program code, when loaded and executed by a processor of a computer device, causes the processor of the computer device to perform the above method for information prompt. In some embodiments, the computer-readable storage medium is a non-volatile computer-readable storage medium, such as a read-only memory (ROM), a random-access memory (RAM), a compact disc read-only memory, (CD-ROM), a magnetic tape, a floppy disk, an optical data storage device, and the like.

In some embodiments, a computer program product including a computer program is provided, wherein the computer program, when loaded and run by a processor, causes the processor to perform the method for information prompt in the above embodiments.

In some embodiments, the computer program involved in the embodiments of the present disclosure may be loaded and executed by one computer device, or executed by a plurality of computer devices disposed in one place, or executed by a plurality of computer devices distributed over a plurality of places and interconnected via a communication network. The plurality of computer devices distributed in the plurality of places and interconnected via the communication network may form a blockchain system.

All the embodiments of the present disclosure may be practiced individually or in combination with other embodiments, which are all regarded as the scope of protection required by the present disclosure.

## Claims

1. A method for information prompt for an audio/video call, comprising:
receiving an audio/video call invitation, wherein the audio/video call invitation is configured to invite an account logged on a terminal to join the audio/video call;
determining whether an unacceptance condition of the audio/video call is met; and
in response to the unacceptance condition being met, displaying, on a session list page of the account, a first state prompt on a session at a position of a session to which the audio/video call belongs, wherein the first state indicates that the audio/video call is in progress and a user has not joined the audio/video call; and wherein the session list page is configured to display a plurality of audio/video call sessions.

2. The method according to claim 1, wherein the unacceptance condition is one of the following conditions: the account does not accept the audio/video call within a time period,
a reject operation of the account on the audio/video call invitation is received in response to a trigger operation on a rejection control displayed on the terminal,
a close operation of the account on the audio/video call invitation is received in response to a trigger operation on a close control displayed on the terminal,
and the account is in a busy state.

3. The method according to claim 1 or 2, further comprising:
displaying, in response to a trigger operation on the session to which audio/video call belongs, a session interface of the session to which the audio/video call belongs; or
in response to a trigger operation on the first state prompt, joining the audio/video call, or
displaying the session interface of the session to which the audio/video call belongs, or
displaying the session interface of the session to which the audio/video call belongs and positioning the session interface at an initiating position of the audio/video call, or
displaying the session interface of the session to which the audio/video call belongs and displaying a positioning prompt, wherein the positioning prompt is configured to position the initiating position of the audio/video call.

4. The method according to any one of claims 1 to 3, further comprising:
switching, in response to the account joining the audio/video call, the first state prompt to a second state prompt at the position of the session to which the audio/video call belongs on the session list page of the account, wherein the second state prompt is configured to indicate that the account has joined the audio/video call.

5. The method according to claim 4, further comprising:
stopping displaying the second state prompt in response to the account exiting the audio/video call.

6. The method according to any one of claims 1 to 3, further comprising:
stopping displaying the first state prompt in response to ending of the audio/video call.

7. The method according to claim 1, wherein the session list page comprises a session list region and a session top-sticky region, wherein the session list region is configured to display the plurality of sessions corresponding to the account, and the session top-sticky region is configured to stick the plurality of sessions corresponding to the account to a top for display; and
said displaying (202; 302) the first state prompt at the position of the session to which the audio/video call belongs on the session list page of the account comprises at least one of:
displaying the first state prompt on a session prompt item of the audio/video call in the session list region;
displaying the first state prompt on a session aggregation item in the session list region, wherein the session aggregation item is configured to display the sessions corresponding to the account in an aggregating manner; and
displaying the first state prompt on a session prompt item of the audio/video call in the session top-sticky region.

8. The method according to claim 7, wherein the method further comprises at least one of:
displaying an interaction notification prompt and an unread message prompt of the session to which the audio/video call belongs on the session prompt item of the audio/video call in the session list region, wherein the interaction notification prompt indicates that the session to which the audio/video call belongs mentions the account, and the unread message prompt indicates the number of unread messages in the session to which the audio/video call belongs;
displaying the interaction notification prompt and the unread message prompt of the session to which the audio/video call belongs on the session aggregation item in the session list region; and
displaying any one of a state prompt, the interaction notification prompt, and the unread message prompt of the session to which the audio/video call belongs on the session prompt item of the audio/video call in the session top-sticky region.

9. The method according to claim 8, wherein a display priority of the state prompt is greater than a display priority of the interaction notification prompt, and the display priority of the interaction notification prompt is greater than a display priority of the unread message prompt; and
the method further comprises at least one of:
sequentially displaying the state prompt, the interaction notification prompt, and the unread message prompt of the session to which the audio/video call belongs, based on an arrangement order corresponding to the display priority, on the session prompt item of the audio/video call in the session list region;
sequentially displaying the state prompt, the interaction notification prompt, and the unread message prompt of the session to which the audio/video call belongs, based on the arrangement order corresponding to the display priority, on the session aggregation item in the session list region; and
displaying the prompt with a highest display priority on the session prompt item of the audio/video call in the session top-sticky region.

10. The method according to any one of claims 1 to 9, further comprising:
displaying any one of a group profile photo of the session to which the audio/video call belongs, a profile photo of an account initiating the audio/video call in the session to which the audio/video call belongs, and a profile photo of any at least one account in the session to which the audio/video call belongs at the position of the session to which the audio/video call belongs on the session list page.

11. An apparatus for information prompt, comprising:
a receiving unit (701), configured to receive an audio/video call invitation, wherein the audio/video call invitation is configured to invite an account logged on a terminal to join a target audio/video call; and
a displaying unit (702) configured to display, in the case that the account does not accept the audio/video call invitation, a first state prompt at a position of a session to which the target audio/video call belongs on a session list page of the account, wherein the first state prompt indicates that there is an unjoined audio/video call which is in progress.

12. The apparatus according to claim 11, wherein the case that the account does not accept the audio/video call invitation comprises any one of cases that:
the account does not accept the audio/video call invitation within a target time period, a reject operation of the account on the audio/video call invitation is received, a close operation of the account on the audio/video call invitation is received, and the account is in a busy state.

13. The apparatus according to claim 11 or 12, wherein the displaying unit (702) is configured to:
display, in response to a trigger operation on the session to which target audio/video call belongs, a session interface of the session to which the target audio/video call belongs; or
in response to a trigger operation on the first state prompt, join the target audio/video call, or display the session interface of the session to which the target audio/video call belongs, or display the session interface of the session to which the target audio/video call belongs and position the session interface at an initiating position of the target audio/video call, or display the session interface of the session to which the target audio/video call belongs and display a positioning prompt, wherein the positioning prompt is configured to position the initiating position of the target audio/video call.

14. The apparatus according to any one of claims 11 to 13, further comprising:
a switching unit, configured to switch, in response to the account joining the target audio/video call, the first state prompt to a second state prompt at the position of the session to which the target audio/video call belongs on the session list page of the account, wherein the second state prompt is configured to indicate that the account has joined the target audio/video call.

15. A non-volatile computer-readable storage medium storing a program code therein, wherein the program code, when loaded and executed by a processor of a computer device, causes the computer device to perform the method for information prompt as defined in any one of claims 1 to 10.
